# EUROPEAN PATENT APPLICATION

(11) **EP 3 627 315 A1**
(43) Date of publication of application: **25.03.2020**
(21) Application number: 19197635.6
(22) Date of filing: 16.09.2019
(51) Int. Cl.: G06F 8/65

(54) **SYSTEMS AND METHODS FOR MANAGING MISSION-SPECIFIC AVIONICS FEATURES IN A CONNECTED AIRCRAFT ENVIRONMENT**

(30) Priority: 19.09.2018 US 201816135868
(71) Applicant: Honeywell International Inc., Morris Plains, NJ New Jersey 07950 (US)
(72) Inventor: KRISHNAMOORTHY, Nathan, Morris Plains, NJ 07950 (US); GOVINDILLAM K, Sreenivasan, Morris Plains, NJ 07950 (US); THIMMAIAH, Padma, Morris Plains, NJ 07950 (US); DAIRMAN, Charles, Morris Plains, NJ 07950 (US)
(74) Representative: Haseltine Lake Kempner LLP

(57) **Abstract**

Disclosed are methods and systems for transmitting a notification to modify vehicle features specific to a mission for a vehicle. For instance, a method may include obtaining feature information about the vehicle, the feature information indicating a sub-set of features the vehicle has enabled out of a full-set of features available to the vehicle; monitoring a vehicle state of the vehicle; detecting changes in the vehicle state by comparing a current vehicle state to a historical vehicle state; in response to detecting a change in the vehicle state, determining whether to transmit a notification to modify the sub-set of the features the vehicle has enabled based on an analysis of the change in the vehicle state; and in response to determining to transmit the notification, transmitting to the vehicle the notification to modify the sub-set of the features the vehicle has enabled.

## Description

### TECHNICAL FIELD

Various embodiments of the present disclosure relate generally to managing vehicle features and, more particularly, to system and methods for managing mission-specific avionics features in a connected aircraft environment.

### BACKGROUND

Aircraft connectivity has progressed substantially in recent years. For instance, one area of progress has been in augmenting solutions in cockpit, cabin, and other areas like aircraft maintenance and performance optimization. Moreover, reliable connectivity provides avenues of new software and data distribution models. For instance, avionic service providers may provide, among other things, cockpit functions like flight management, enhanced ground proximity warning, and terrain awareness.

More generally, new distribution models like remote feature activation and subscription based feature activation are being considered by vehicle service providers to monetize software and/or increase user functionality. In remote feature activation based distribution models, a superset of vehicle features are hosted as onboard functions, but they are enabled and used on a demand basis. This demand can be anticipated and feature enablement may be proposed at pre-route planning stages.

As specific example, a full set of avionics features of an aircraft may be formally certified and hosted, but only the basic features (a sub-set of the full set of avionics features) are enabled, and non-basic features are activated or upsold. Specifically, an avionics cloud hosts the superset of functions and the avionics cloud analyzes the mission characteristics. For example, some avionics cloud based applications are available that can suggest useful avionics features for an upcoming mission during offline mission planning. Offline mission planning refers to mission planning done prior to the mission, typically away from the aircraft with the cockpit not powered on (e.g. flight planning done in a hotel room). Also, avionics cloud servers may offer more computing power to iteratively fix a mission and file it.

However, it is possible that the mission environment is different while the mission is in progress and through the various phases of the mission, as compared to the environment used in offline planning. Therefore, there is a disconnect between the features having been planned versus features that would be planned for the current mission environment (e.g., different factors). Therefore, a different set of features which would make the mission safer/ more efficient are not being used by the aircraft.

The present disclosure is directed to overcoming one or more of these above-referenced challenges.

### SUMMARY OF THE DISCLOSURE

According to certain aspects of the disclosure, systems and methods are disclosed for transmitting a notification to modify vehicle features specific to a mission for a vehicle.

For instance, the computer-implemented method may include: obtaining feature information about a vehicle, the feature information indicating a sub-set of features the vehicle has enabled out of a full-set of features available to the vehicle; monitoring a vehicle state of the vehicle, the vehicle state including at least one of a mission plan of the vehicle, external parameters of the vehicle, or vehicle parameters of the vehicle; detecting changes in the vehicle state by comparing a current vehicle state to a historical vehicle state; in response to detecting a change in the vehicle state, determining whether to transmit a notification to modify the sub-set of the features the vehicle has enabled based on an analysis of the change in the vehicle state; and in response to determining to transmit the notification, transmitting to the vehicle the notification to modify the sub-set of the features the vehicle has enabled.

The server that transmits a notification to modify vehicle features specific to a mission for a vehicle, may include: a memory storing instructions; and a processor configured to execute the instructions to perform a process. The process may include: obtaining feature information about the vehicle, the feature information indicating a sub-set of features the vehicle has enabled out of a full-set of features available to the vehicle; monitoring a vehicle state of the vehicle, the vehicle state including at least one of a mission plan of the vehicle, external parameters of the vehicle, or vehicle parameters of the vehicle; detecting changes in the vehicle state by comparing a current vehicle state to a historical vehicle state; in response to detecting a change in the vehicle state, determining whether to transmit a notification to modify the sub-set of the features the vehicle has enabled based on an analysis of the change in the vehicle state; and in response to determining to transmit the notification, transmitting to the vehicle the notification to modify the sub-set of the features the vehicle has enabled.

The non-transitory computer-readable medium may store instructions that, when executed by a server, cause the server to perform a method. The method may include: obtaining feature information about the vehicle, the feature information indicating a sub-set of features the vehicle has enabled out of a full-set of features available to the vehicle; monitoring a vehicle state of the vehicle, the vehicle state including at least one of a mission plan of the vehicle, external parameters of the vehicle, or vehicle parameters of the vehicle; detecting changes in the vehicle state by comparing a current vehicle state to a historical vehicle state; in response to detecting a change in the vehicle state, determining whether to transmit a notification to modify the sub-set of the features the vehicle has enabled based on an analysis of the change in the vehicle state; and in response to determining to transmit the notification, transmitting to the vehicle the notification to modify the sub-set of the features the vehicle has enabled.

Additional objects and advantages of the disclosed embodiments will be set forth in part in the description that follows, and in part will be apparent from the description, or may be learned by practice of the disclosed embodiments. The objects and advantages of the disclosed embodiments will be realized and attained by means of the elements and combinations particularly pointed out in the appended claims. As will be apparent from the embodiments below, an advantage to the disclosed systems and methods is that multiple parties may fully utilize their data without allowing others to have direct access to raw data. The disclosed systems and methods discussed below may allow advertisers to understand users' online behaviors through the indirect use of raw data and may maintain privacy of the users and the data.

It is to be understood that both the foregoing general description and the following detailed description are exemplary and explanatory only and are not restrictive of the disclosed embodiments, as claimed.

### BRIEF DESCRIPTION OF THE DRAWINGS

The accompanying drawings, which are incorporated in and constitute a part of this specification, illustrate various exemplary embodiments and together with the description, serve to explain the principles of the disclosed embodiments.
FIG. 1 depicts an exemplary system infrastructure for transmitting a notification to modify avionic features specific to a mission for an aircraft, according to one or more embodiments.
FIG. 2 depicts a flowchart of a method of analyzing and targeting features to be enabled per a mission for an aircraft, according to one or more embodiments.
FIG. 3 depicts a flowchart for transmitting a notification to modify vehicle features specific to a mission for a vehicle, according to one or more embodiments.
FIG. 4 depicts an example system that may execute techniques presented herein.

### DETAILED DESCRIPTION OF EMBODIMENTS

Various embodiments of the present disclosure relate generally to managing vehicle features and, more particularly, to system and methods for managing mission-specific avionics features in a connected aircraft environment.

The terminology used below may be interpreted in its broadest reasonable manner, even though it is being used in conjunction with a detailed description of certain specific examples of the present disclosure. Indeed, certain terms may even be emphasized below; however, any terminology intended to be interpreted in any restricted manner will be overtly and specifically defined as such in this Detailed Description section. Both the foregoing general description and the following detailed description are exemplary and explanatory only and are not restrictive of the features, as claimed.

As used herein, the terms "comprises," "comprising," "having," including," or other variations thereof, are intended to cover a non-exclusive inclusion such that a process, method, article, or apparatus that comprises a list of elements does not include only those elements, but may include other elements not expressly listed or inherent to such a process, method, article, or apparatus.

In this disclosure, relative terms, such as, for example, "about," "substantially," "generally," and "approximately" are used to indicate a possible variation of ±10% in a stated value.

The term "exemplary" is used in the sense of "example" rather than "ideal." As used herein, the singular forms "a," "an," and "the" include plural reference unless the context dictates otherwise.

While this disclosure describes the systems and methods with reference to aircraft (e.g., aircraft avionics systems, crew interface), it should be appreciated that the present systems and methods are applicable to management of vehicle features, including those of drones, automobiles, trains (locomotives), or any other autonomous and/or Internet-connected vehicle.

In general, the present disclosure is directed to managing vehicle features. As vehicles include more software-enabled features that are not strictly required for minimum safety standards, vehicle operators must determine whether and when to enable certain software-enabled features. For instance, in the aircraft industry, there are cloud based applications that help optimize flight planning/mission planning while away from an aircraft cockpit (called "offline planning") by suggesting the use of software-enabled avionic features (e.g., synthetic vision). However, it is possible that the mission environment is different while the mission is in progress through the various phases of the mission, as compared to the mission environment used in offline planning. Therefore, the mission plan as determined during offline planning may not be relevant to the current circumstances. Moreover, with the increase in vehicle connectivity, a vehicle may transmit and receive substantial information about its current state to various entities (e.g., Air Traffic Control (ATC) or an aircraft operations center for an operating entity). Therefore, as described in more detail below, a server may analyze a current state of a vehicle and determine if one or more software-enabled features should be activated or de-activated based on the current state of the vehicle, so that the vehicle may utilize resources more efficiently and/or safety may be increased.

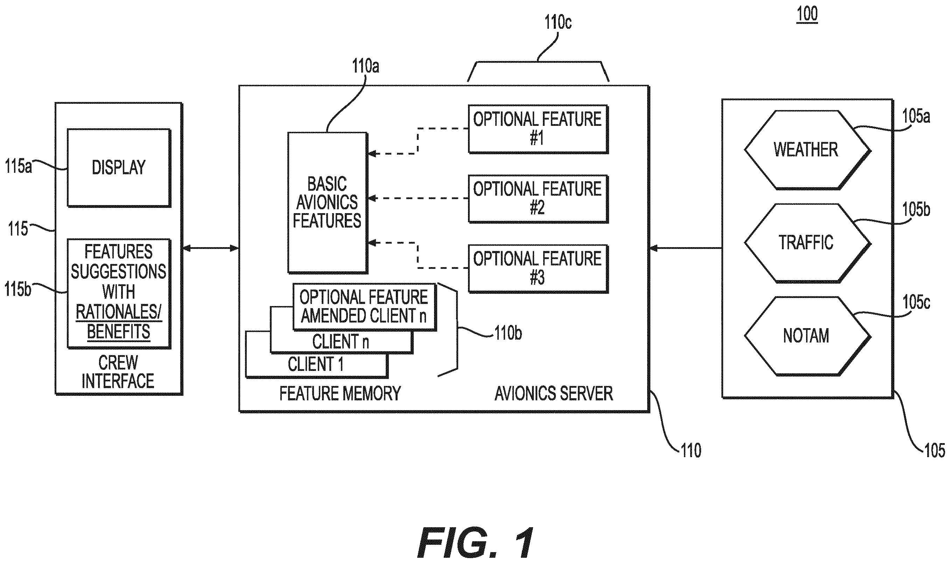

As shown in FIG. 1, an exemplary system infrastructure 100 is depicted for transmitting a notification to modify avionic features specific to a mission for an aircraft, according to one or more embodiments. The system infrastructure 100 for transmitting a notification to modify avionic features specific to a mission for an aircraft, may include external factors 105, avionics server 110, and crew interface 115.

External factors 105 may include, among other things, weather information 105a, traffic data 105b, Notice to Airmen (NOTAM) data 105c.

Avionics server 110 may include basic avionics features 110a, optional features data #1, #2, #3, ... #n 110c, and optional features for client data #1, #2, ... #n 110b.

Crew interface 115 may have a display 115a that displays various information, including feature suggestions with rationales/benefits data 115b.

Avionics server 110 may receive/monitor external factors 105, monitor aircraft parameters, and a mission plan of the aircraft (collectively "aircraft state").

A mission plan of the aircraft may include one or more of departure location, arrival location/destination, flight plan or route between the two, information about required routes, and/or information about restricted areas. Aircraft parameters may include one or more of aircraft data and pilot data. Aircraft data may include one or more of information on aircraft type, aircraft fuel level, aircraft weight, etc. Pilot data may include one or more of historical data on where the pilots have flown into/out of, data on pilot experience, etc.

Avionics server 110 may keep track of the optional features (optional features data #1 ... #n 110c) that are currently enabled on an aircraft beyond the basic avionics features 110a for the aircraft. Avionics server 110 may analyze the aircraft state as the mission is in progress from start to end, or at set portions (e.g., during departure or arrival operations, or periodically (e.g., every set number of minutes/seconds, or at specific intervals travelled, or at set waypoints). Avionics server 110 analyzes the superset of optional features available to the aircraft, as set by optional features for client data #1, #2, ... #n 110b. Optional features for client data #1, #2, ... #n 110b may set policies for a set of aircraft owned or managed by a specific operator, where the policies may limit availability of non-basic avionics features (based on time, location, cost, type, etc.).

The avionics server 110 identifies a set of features among the superset of features that could be turned on/enabled, based on the context of the aircraft (as indicated by the aircraft state). The avionics server 110 may transmit the identified set of features to be turned on/enabled to the crew interface 115. The transmitted identified set of features to be enabled may be presented to a crew as a suggestion to be elected by the crew, or may be presented to the crew as being required to be turned on/enabled, or it may turn on/enable the feature and inform the crew.

The avionics server 110 may identify features to disable that are currently enabled (based an earlier mission and aircraft state), but that no longer match the context of the aircraft (as indicated by the aircraft state). The avionics server 110 may transmit the set of features to be disabled to the crew interface 115. The transmitted identified set of features to be disabled may be presented to a crew as a suggestion to be elected by the crew, or may be presented to the crew as being required to be turned off/disabled, or it may turn off/disable the feature and inform the crew.

Moreover, the features to be enabled and/or the features to be disabled may also include a listing of the benefits (e.g., fuel efficiency, ease of operation, space containment, cost reduction, etc.) along with a rationale (e.g., weather has reduced visibility at destination), so that the crew may be informed of why the feature is being enabled/disabled. Alternatively, only one of the benefit or the rationale may be included, or neither of the benefit or the rationale may be included.

The crew interface 115 may receive an input or inputs (from the crew) that enables/disables a feature or features. An avionics system (not pictured) of the aircraft may then enable/disable the features based on the input(s).

One benefit of the disclosure is that optional feature enablement or disablement based on periodic tracking of the aircraft, results in optimum utilization of system assets and system throughput.

The avionics server 110 may host flight planning, terrain awareness, and other functions. The avionics server 119 may keep track of the aircraft state (external factors 105, vehicle parameters, and/or mission scenario/plan). The avionics server 110 may transmit a notification of optional features/disabled features that would be beneficial to be enabled (or enabled features to be disabled) for the aircraft's mission, based on the aircraft state. The notification may be a suggestion, or informative, or a required action item. The crew interface 115 may receive an input, after presenting the crew with the features suggestions with rationales/benefits 115b. The input may enable the disabled features and/or disable the enabled features.

Moreover, the feature to the enabled/disabled may also include a proposed time or a proposed mission part (e.g., a portion of a route of the aircraft) for enablement/disablement. As an example, an aircraft is flying a required navigation performance (RNP) procedure along a complex terrain, the avionics server 110 may identify the synthetic vision features to be enabled before approach (e.g., within a specific period time before an estimated arrival time or before a descent procedure); and the avionics server 110 may transmit a notification indicating the enablement of the synthetic vision features to be enabled at point X (where X is at a waypoint or a specific time in the process of descent) to the crew interface 115. As another example, an aircraft is flying to airport PPPP, the avionics server 110 may identify airport map features and synthetic vision features to be enabled before approach, based on account of cloud cover near airport PPPP; and the avionics server 110 may transmit a notification indicating the enablement of the airport map features and the synthetic vision features to be enabled to the crew interface 115.

Moreover, the features could be distributed between the avionics server 110 and onboard avionics (not depicted). In the case of features like synthetic vision, airport map, etc., the feature enablement may be performed on onboard avionics itself. In other cases, as the avionics server 110 tracks the aircraft state, certain features may be executed on the avionics server 110; and the avionics server 110 may transmit outputs to the aircraft (e.g. optimum altitude, cost index, etc.) as mission control parameters. This distribution may allow for aircraft that do not have advanced capabilities the ability to still utilize advanced capabilities.

In one example, if an aircraft is diverted to a new airport, and the new airport has visibility issues (based on weather or nature of terrain), then the avionics server 110 may automatically suggest enablement of the Synthetic Vision System (SVS) features on the avionics.

For instance, the steps of the disclosed process may include: (1) the change in flight plan is notified to the avionics server 110; (2) avionics server 110 assesses the change in the flight plan and destination airport features (aircraft state); (3) avionics server 110 identifies significant weather or terrain near approach based on aircraft state; (4) avionics server 110 determines whether SVS features are available as an optional feature for the aircraft based on optional features data #1 ... #n 110c and optional features for client data #1, #2, ... #n 110b; (5) avionics server 110 determines the SVS features are available, identifies the SVS features for enablement, and transmits the SVS features as a notification to the crew interface 115; and (6) avionics server 110 receives messages or input from the crew on feature enablement.

In another example, while an aircraft mission is in progress, an aircraft may be deviated to an airport not very familiar to the crew (as the aircraft parameters may include, among other things, historical data that may include a history of airports flown to/from by the crew). Based on of the historical data, the avionics server 110 may identify detailed airport map features for enablement.

For instance, the steps of the disclosed process may include: (1) avionics server 110 may receive a notice that a flight plan/destination is changed during the flight of the aircraft; (2) avionics server 110 may examine the historical data to check the number of times the crew has flown to/from the new airport (e.g., a familiarity of the airport); (3) avionics server 110 may identify the airport map features to be enabled, so that the crew may have awareness of the layout, runway, and preview of approaches, and the avionics server 110 may transmit a notification of the airport map features to the crew interface 115; and (4) the crew may decide on the feature enablement.

In yet another example, while an aircraft mission is in progress, the jet stream aiding the aircraft mission may drift upwards, and the avionics server 110 may identify a step climb to an optimum altitude (where the benefit of jet stream could be used in mission).

For instance the steps of the disclosed process may include: (1) avionics server 110 may receive weather data 105a or NOTAM data 105c, which includes jet stream information, which is about the jet streams; (2) avionics server 110 may assess feasibility of optimum cruise altitude for the aircraft and the jet streams based on the jet stream information and aircraft data; (3) if the avionics server 110 assesses that optimum cruise altitude is feasible, the avionics server 110 may identify an optimum cruise altitude feature for enablement, and the avionics server 110 may transmit a notification regarding the optimum cruise altitude feature to the crew interface 115; and (4) crew may decide on the feature enablement.

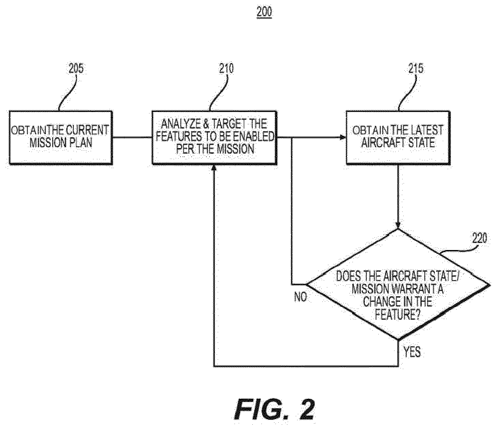

FIG. 2 depicts a flowchart of a method of analyzing and targeting features to be enabled per a mission for an aircraft, according to one or more embodiments. Specifically, an avionics server 110 may perform the process 200 of the flowchart in FIG. 2, which includes:

Obtain the current mission plan (block 205); then, analyze and target the features to be enabled per the mission plan (block 210); then, obtain the latest aircraft state (215); then, determine does the aircraft state/mission plan warrant a change in the feature (block 220).

If the avionics server 110 determines "Yes", the aircraft state/mission plan does warrant a change in the feature, then the avionics server 110 returns to analyze and target the features to be enabled per the mission plan.

If the avionics server 110 determines "No", the aircraft state/mission plan does not warrant a change in the feature, then the avionics server 110 returns to get the lasts aircraft state.

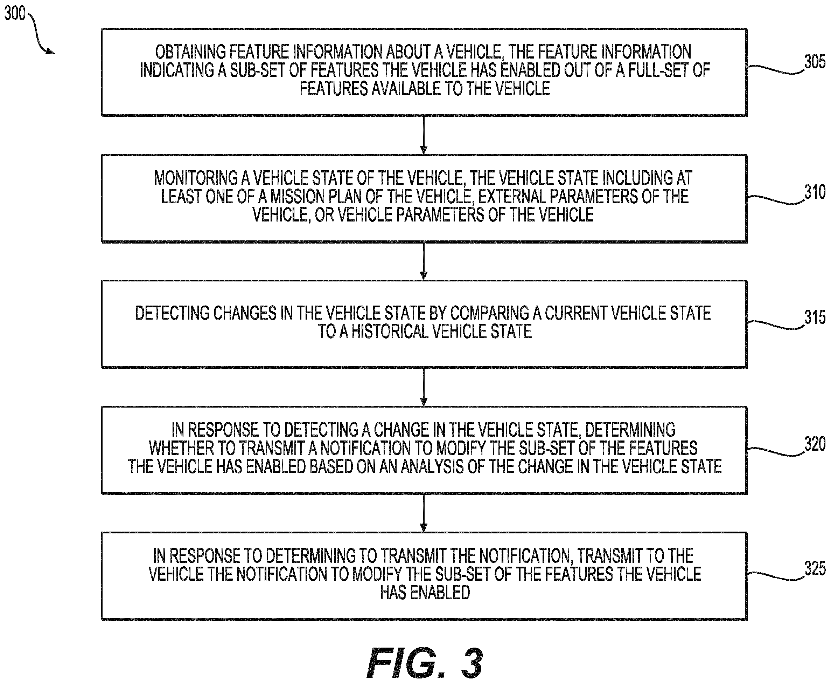

FIG. 3 depicts a flowchart of transmitting a notification to modify features specific to a mission for a vehicle, according to one or more embodiments. Specifically, a server may perform the process 300 of the flowchart in FIG. 3 by:

First, obtaining feature information about a vehicle, the feature information indicating a sub-set of features the vehicle has enabled out of a full-set of features available to the vehicle (block 305).

Then, process 300 may include monitoring a vehicle state of the vehicle, the vehicle state including at least one of a mission plan of the vehicle, external parameters of the vehicle, or vehicle parameters of the vehicle (block 310).

Then, process 300 may include detecting changes in the vehicle state by comparing a current vehicle state to a historical vehicle state (block 315).

Then, in response to detecting a change in the vehicle state, process 300 may include determining whether to transmit a notification to modify the sub-set of the features the vehicle has enabled based on an analysis of the change in the vehicle state (block 320).

Then, in response to determining to transmit the notification, process 300 may include transmitting to the vehicle the notification to modify the sub-set of the features the vehicle has enabled (block 325).

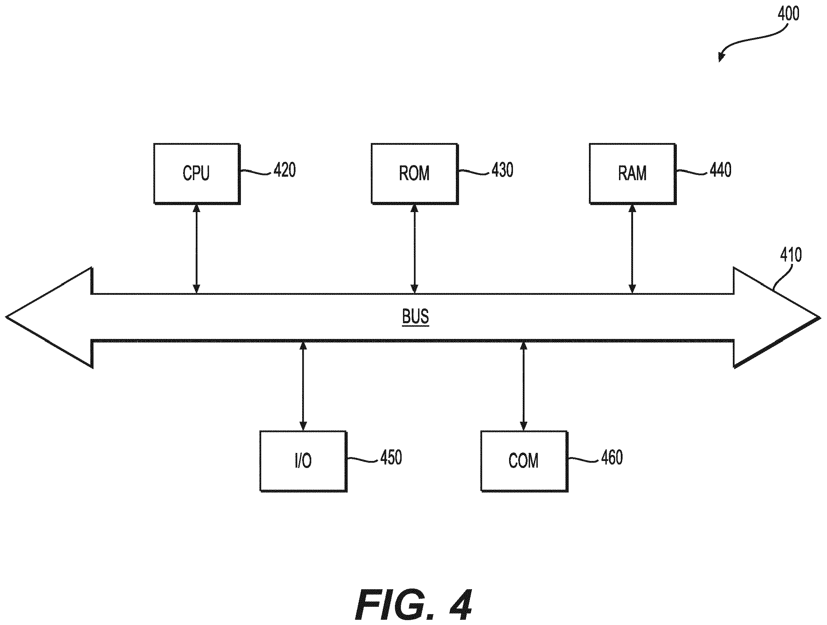

FIG. 4 is a simplified functional block diagram of a computer that may be configured as any of the systems of FIG. 1 to execute techniques described herein, according to exemplary embodiments of the present disclosure. Specifically, as an example, the avionics server 110, may be an assembly of hardware 400 including, for example, a data communication interface 460 for packet data communication. The platform may also include a central processing unit ("CPU") 420, in the form of one or more processors, for executing program instructions. The platform may include an internal communication bus 410, program storage, and data storage for various data files to be processed and/or communicated by the platform such as ROM 430 and RAM 440, although the system 400 may receive programming and data via network communications. The system 400 also may include input and output ports 450 to connect with input and output devices such as keyboards, mice, touchscreens, monitors, displays, etc. Of course, the various system functions may be implemented in a distributed fashion on a number of similar platforms, to distribute the processing load. Alternatively, the systems may be implemented by appropriate programming of one computer hardware platform.

Any suitable system infrastructure may be put into place to allow for the assessment of models monitoring devices. FIG. 1 and the following discussion provide a brief, general description of a suitable computing environment in which the present disclosure may be implemented. In one embodiment, any of the disclosed systems, methods, and/or graphical user interfaces may be executed by or implemented by a computing system consistent with or similar to that depicted in FIG. 1. Although not required, aspects of the present disclosure are described in the context of computer-executable instructions, such as routines executed by a data processing device, e.g., a server computer, wireless device, and/or personal computer. Those skilled in the relevant art will appreciate that aspects of the present disclosure can be practiced with other communications, data processing, or computer system configurations, including: Internet appliances, hand-held devices (including personal digital assistants ("PDAs")), wearable computers, all manner of cellular or mobile phones (including Voice over IP ("VoIP") phones), dumb terminals, media players, gaming devices, virtual reality devices, multi-processor systems, microprocessor-based or programmable consumer electronics, set-top boxes, network PCs, mini-computers, mainframe computers, and the like. Indeed, the terms "computer," "server," and the like, are generally used interchangeably herein, and refer to any of the above devices and systems, as well as any data processor.

Aspects of the present disclosure may be embodied in a special purpose computer and/or data processor that is specifically programmed, configured, and/or constructed to perform one or more of the computer-executable instructions explained in detail herein. While aspects of the present disclosure, such as certain functions, are described as being performed exclusively on a single device, the present disclosure may also be practiced in distributed environments where functions or modules are shared among disparate processing devices, which are linked through a communications network, such as a Local Area Network ("LAN"), Wide Area Network ("WAN"), and/or the Internet. Similarly, techniques presented herein as involving multiple devices may be implemented in a single device. In a distributed computing environment, program modules may be located in both local and/or remote memory storage devices.

Aspects of the present disclosure may be stored and/or distributed on non-transitory computer-readable media, including magnetically or optically readable computer discs, hard-wired or preprogrammed chips (e.g., EEPROM semiconductor chips), nanotechnology memory, biological memory, or other data storage media. Alternatively, computer implemented instructions, data structures, screen displays, and other data under aspects of the present disclosure may be distributed over the Internet and/or over other networks (including wireless networks), on a propagated signal on a propagation medium (e.g., an electromagnetic wave(s), a sound wave, etc.) over a period of time, and/or they may be provided on any analog or digital network (packet switched, circuit switched, or other scheme).

Program aspects of the technology may be thought of as "products" or "articles of manufacture" typically in the form of executable code and/or associated data that is carried on or embodied in a type of machine-readable medium. "Storage" type media include any or all of the tangible memory of the computers, processors or the like, or associated modules thereof, such as various semiconductor memories, tape drives, disk drives and the like, which may provide non-transitory storage at any time for the software programming. All or portions of the software may at times be communicated through the Internet or various other telecommunication networks. Such communications, for example, may enable loading of the software from one computer or processor into another, for example, from a management server or host computer of the mobile communication network into the computer platform of a server and/or from a server to the mobile device. Thus, another type of media that may bear the software elements includes optical, electrical and electromagnetic waves, such as used across physical interfaces between local devices, through wired and optical landline networks and over various air-links. The physical elements that carry such waves, such as wired or wireless links, optical links, or the like, also may be considered as media bearing the software. As used herein, unless restricted to non-transitory, tangible "storage" media, terms such as computer or machine "readable medium" refer to any medium that participates in providing instructions to a processor for execution.

While the presently disclosed methods, devices, and systems are described with exemplary reference to transmitting data, it should be appreciated that the presently disclosed embodiments may be applicable to any environment, such as a desktop or laptop computer, an automobile entertainment system, a home entertainment system, etc. Also, the presently disclosed embodiments may be applicable to any type of Internet protocol.

Other embodiments of the disclosure will be apparent to those skilled in the art from consideration of the specification and practice of the invention disclosed herein. It is intended that the specification and examples be considered as exemplary only, with a true scope and spirit of the invention being indicated by the following claims.

## Claims

1. A computer-implemented method for transmitting a notification to modify vehicle features specific to a mission for a vehicle, the method comprising:
obtaining feature information about the vehicle, the feature information indicating a sub-set of features the vehicle has enabled out of a full-set of features available to the vehicle;
monitoring a vehicle state of the vehicle, the vehicle state including at least one of a mission plan of the vehicle, external parameters of the vehicle, or vehicle parameters of the vehicle;
detecting changes in the vehicle state by comparing a current vehicle state to a historical vehicle state;
in response to detecting a change in the vehicle state, determining whether to transmit a notification to modify the sub-set of the features the vehicle has enabled based on an analysis of the change in the vehicle state; and
in response to determining to transmit the notification, transmitting to the vehicle the notification to modify the sub-set of the features the vehicle has enabled.

2. The method of claim 1, wherein the transmitting to the vehicle the notification includes transmitting a summary of features to be enabled and features to disabled with corresponding rationales and/or benefits.

3. The method of claim 1, wherein
the sub-set of features is a first set of features,
the analysis of the change in the vehicle state indicates a second set of features to be enabled out of the full-set of features, and
the determining whether to transmit the notification includes
determining to transmit the notification when the second set of features is different than the first set of features, and
determining not to transmit the notification when the second set of features is not different than the first set of features.

4. The method of claim 3, wherein the transmitting to the vehicle the notification includes transmitting a section of a route of the vehicle in which a feature, among the second set of features, is to be enabled.

5. The method of claim 3, further comprising:
receiving a response the vehicle indicating that the second set of features are enabled; and
updating the first set of features to correspond to the second set of features.

6. The method of claim 1, wherein the transmitting to the vehicle the notification includes transmitting a mission control parameter, the mission control parameter being determined by the server to correspond to an optimal route or optimal cost index.

7. The method of claim 1, wherein the monitoring of the vehicle state occurs during at least one of:
a departure period,
an arrival period,
an entire trip, or
periodic episodes based on time or distance travelled.

8. A server that transmits a notification to modify vehicle features specific to a mission for a vehicle, comprising:
a memory storing instructions; and
a processor configured to execute the instructions to perform a process including:
obtaining feature information about the vehicle, the feature information indicating a sub-set of features the vehicle has enabled out of a full-set of features available to the vehicle;
monitoring a vehicle state of the vehicle, the vehicle state including at least one of a mission plan of the vehicle, external parameters of the vehicle, or vehicle parameters of the vehicle;
detecting changes in the vehicle state by comparing a current vehicle state to a historical vehicle state;
in response to detecting a change in the vehicle state, determining whether to transmit a notification to modify the sub-set of the features the vehicle has enabled based on an analysis of the change in the vehicle state; and
in response to determining to transmit the notification, transmitting to the vehicle the notification to modify the sub-set of the features the vehicle has enabled.

9. The server of claim 8, wherein the transmitting to the vehicle the notification includes transmitting a summary of features to be enabled and features to disabled with corresponding rationales and/or benefits.

10. The server of claim 8, wherein
the sub-set of features is a first set of features,
the analysis of the change in the vehicle state indicates a second set of features to be enabled out of the full-set of features, and
the determining whether to transmit the notification includes
determining to transmit the notification when the second set of features is different than the first set of features, and
determining not to transmit the notification when the second set of features is not different than the first set of features.
